## Europäisches Patentamt
## European Patent Office
## Office européen des brevets

(11) Numéro de publication: **0 030 487**
**B1**

(12) **FASCICULE DE BREVET EUROPEEN**

(45) Date de publication du fascicule du brevet: **20.03.85**

(21) Numéro de dépôt: **80401608.7**

(22) Date de dépôt: **12.11.80**

(51) Int. Cl.⁴: **C 01 B 25/46, C 01 B 25/235, A 23 K 1/175, A 23 L 1/30**

(54) **Procédé de purification d'un acide phosphorique de voie humide.**

(30) Priorité: **20.11.79 FR 7928530**

(43) Date de publication de la demande:
**17.06.81 Bulletin 81/24**

(45) Mention de la délivrance du brevet:
**20.03.85 Bulletin 85/12**

(84) Etats contractants désignés:
**BE DE FR GB NL**

(56) Documents cités:
**DE-A-2 522 220**
**FR-A-1 387 492**
**FR-A-2 197 639**
**FR-A-2 340 901**
**FR-A-2 375 143**
**US-A-3 978 196**

Le dossier contient des informations
techniques présentées postérieurement au
dépôt de la demande et ne figurant pas dans le
présent fascicule.

(73) Titulaire: **RHONE-POULENC CHIMIE DE BASE**
**25, quai Paul Doumer**
**F-92408 Courbevoie (FR)**

(72) Inventeur: **Winand, Louis**
**Le Village Caumont**
**F-27310 - Bourg Achard (FR)**

(74) Mandataire: **Dubruc, Philippe et al**
**RHONE-POULENC RECHERCHES Service**
**Brevets Chimie et Polymères 25, quai Paul-**
**Doumer**
**F-92408 Courbevoie Cedex (FR)**

(56) Documents cités:
**CHEMICAL ABSTRACTS, vol. 72, no. 2, 26
janvier 1970, page 119, colonne de droite,
abrégé 14327k Columbus, Ohio, US
CHEMICAL ABSTRACTS, vol. 92, no. 8, 25
février 1980, page 139, colonne de gauche,
abrégé 61146y Columbus, Ohio, US**

Courier Press, Leamington Spa, England.

## Description

La présente invention concerne un procédé de purification d'un acide phosphorique brut de voie humide et, plus particulièrement, elle concerne un procédé d'obtention d'un acide phosphorique incolore ou peu coloré à partir d'un minerai de phosphate non calciné par une combinaison de moyens de décoloration et de moyens d'extraction liquide-liquide.

On connaît la fabrication d'acide phosphorique ou de phosphate purifié comprenant l'attaque d'une roche phosphatée au moyen d'un acide fort comme l'acide sulfurique, puis l'extraction de la liqueur brute obtenue par filtration, laquelle contient de nombreuses impuretés anioniques et cationiques, et présente une forte coloration, au moyen d'une phase organique substantiellement insoluble dans l'eau telle que par exemple des phosphates d'alkyle ou des alcools aliphatiques en $C_4$—$C_9$. Ensuite on procède généralement à un lavage à l'eau de la phase organique chargée en acide phosphorique puis enfin à une réextraction de l'acide par de l'eau ou une phase aqueuse contenant des ions alcalins, ce par quoi l'on obtient un acide phosphorique ou une solution de phosphate substantiellement purifié. Voir à ce sujet les brevets français n° 1.531.487 et 1.553.095 aux noms de MM. Jean Goret et Louis Winand.

Il est également connu que les roches phosphatées de départ contiennent de nombreuses impuretés de nature organique qui proviennent des gisements eux-mêmes, des adjuvants organiques introduits lors des prétraitements physiques des minerais, et le cas échéant, des adjuvants organiques introduits lors de l'opération de digestion par l'acide fort (antimousses, etc...). Bien entendu la quantité de carbone organique présente dans la roche phosphatée est variable selon l'origine de la roche. Après attaque de la roche, en général par l'acide sulfurique, et filtration du gypse, on recueille un jus brut présentant en fonction de la teneur initiale de la roche en carbone organique une coloration plus ou moins accentuée allant du vert jaune à un aspect de boue brûnatre opaque. Dans cette solution, la teneur en carbone organique (dosée par la quantité de $CO_2$ obtenue après oxydation) peut varier de manière importante par exemple entre 0,013 et 0,04% en poids de solution (0,04 à 0,12% ramené à $P_2O_5$) pour un phosphate d'origine Maroc, Khouribga ou Togo jusqu'à une valeur aussi forte que 0,5% par rapport à $P_2O_5$ pour un phosphate de Floride.

Pour certaines applications, telle que la fabrication des engrais, cette coloration bien que peu attractive n'est pas techniquement gênante. Il n'en est pas de même dans le cas de la préparation d'un acide purifié à usage d'alimentation animale ou humaine.

La mise en oeuvre des techniques d'extraction liquide-liquide en continu sur de tels acides chargés en matières organiques, à l'échelon industriel, au moyen de solvants organiques habituels recyclés pour en extraire l'acide phosphorique, est dans la pratique difficile de réaliser, sinon impossible, en fonction de la quantité de matières organiques colorées présentes dans l'acide brut et du mode de réextraction utilisé (par l'eau ou par une solution de phosphate). En effet, au cours du mélange intime de la phase aqueuse brute et de la phase organique extractive, il se produit une émulsion des phases de par la présence des matières organiques, laquelle émulsion reste stable lors de l'arrêt de l'agitation, si bien qu'il est pratiquement impossible d'obtenir une décantation des phases dans des conditions compatibles avec les conditions normales de fonctionnement en continu d'un atelier industriel. De plus, lorsqu'il est possible d'aboutir après une durée prolongée (mais non industrielle) de décantation, à une séparation des phases, on remarque au voisinage de l'interface des phases, une zone de consistance boueuse constituée de flocs gélatineux noirâtres. Ceci est d'autant plus vrai que la teneur en carbone organique des jus bruts est plus élevée. De même les solvants se colorent en brun très foncé par enrichissement en matières organiques si bien qu'après un certain nombre de recyclages du solvant, celui-ci ne peut plus être utilisé.

C'est ainsi qu'en ce qui concerne les phosphates de Floride riches en matières organiques, l'opération d'extraction liquide-liquide en continu s'avère tout à fait impossible au plan industriel, tandis que sur certains phosphates peu chargés en m.o. (matières organiques) l'opération peut fonctionner d'une manière acceptable. Cependent, même avec ces phosphates, il peut se produire une accumulation de produits gélatineux aux interfaces, principalement avec certains solvants (phosphate de tributyle par exemple) et lorsqu'on procède à la réextraction non par de l'eau, mais avec une solution de phosphate monosodique. En outre la teneur en m.o. de la solution de phosphate est trop élevée pour conduire à des phosphates ou polyphosphates de sodium suffisamment blancs (par exemple un tripolyphosphate de sodium).

On a déjà remédié depuis longtemps à ces inconvénients ou impossibilités techniques en réduisant la teneur en matières organiques de la roche de départ. Il est connu à cet effet de calciner la roche à des températures comprises entre 700°C et 1000°C avant la digestion pendant une durée comprise entre environ une heure et quelques minutes par exemple. De la sorte, il est possible sur le just brut ainsi obtenu, de pratiquer une extraction liquide-liquide dans des conditions industrielles et de récupérer un acide phosphorique purifié.

Néanmoins le traitement précédent de calcination n'est opérant qu'en ce qui concerne l'aptitude à l'extraction de l'acide brut et ne fournit pas par ailleurs un acide réextrait incolore après concentration, compte tenu de ce que la fraction restante des matières organiques après calcination de la roche, le cas échéant à l'état non coloré, fournit sur l'acide aqueux après réextraction par l'eau, au cours des opéra-

2

tions finales de concentration à température élevée, une coloration qui n'est pas acceptée dans les industries de l'alimentation humaine ou animale. Il en résulte sur l'acide déjà purifié par extraction la nécessité d'un traitement de décoloration ou d'élimination des matières organiques restantes par oxydation au moyen d'un oxydant puissant comme il est décrit dans les brevets US—A—2,013,970 (Moore), DBP 884.358 (Collardin), US—A—4,044,108 (Kikuchi) dans lesquels l'acide phosphorique, plus ou moins concentré, est chauffé en présence de chlorate, d'eau oxygénée ou d'un autre oxydant, ce par quoi l'on obtient un acide incolore ou peu coloré apte à utilisation dans l'industrie de l'alimentation.

Toutefois, le traitement précédent de calcination est onéreux et gros consommateur d'énergie. De plus, sur une installation industrielle de fabrication d'acide phosphorique par la voie humide, il est fréquent qu'une partie seulement de l'acide brut soit dérivée pour la fabrication d'acide purifié, alors que l'autre partie, en général la plus importante, est destinée à la fabrication d'engrais; dans ce cas par conséquent, pour que l'installation fonctionne en continu avec deux types d'acides produits en continu, il est nécessaire que la totalité de la roche phosphatée introduite à l'installation soit calcinée, ce qui augmente proportionnellement le coût de la calcination par tonne d'acide purifié produit.

Une possibilité de procédé continu d'extraction d'un acide phosphorique brut de voie humide obtenu par attaque sulfurique d'un minerai non calciné est décrit dans la demande de brevet français FR—A—2.132.203, pages 9—10. Ces auteurs ont également remarqué que l'extraction par un alcool aliphatique d'un acide brut provenant d'un minerai non calciné conduit à un enrichissement en goudron de la phase extractive, dans un procédé continu avec recyclage du solvant, à un niveau tel que le procédé devient inutilisable. Cette impossibilité est résolue par un stade supplémentaire de purification du solvant au moyen d'un alcali ou par distillation pour ramener le taux de goudron à une valeur acceptable. Il n'en reste pas moins, toutefois, que les durées de décantation utilisées dans cette publication paraissent peu compatibles avec un procédé industriel.

Il existe donc un besoin pour un procédé continu d'obtention d'un acide phosphorique purifié par extraction liquide-liquide avec solvant recyclé, qui soit incolore ou peu coloré à partir d'une roche phosphatée sans qu'il soit besoin de la calciner.

On connait enfin un procédé d'élimination des produits organiques d'un acide phosphorique de voie humide (FR—A—2.340.901) dans lequel un acide extrait et concentré à une teneur en $H_3PO_4$ d'au moins 90% est traité par un chlorate. Le brevet cité fait par ailleurs état de traitement soit par l'eau oxygénée, soit par du charbon actif à une température de 80°C et indique que les acides ainsi traités se recolorent au chauffage.

Le but de la présente invention concerne donc un procédé continu d'obtention d'un acide phosphorique purifié incolore et présentant notamment un indice de coloration Apha inférieur à 10 en vue d'applications alimentaires, ledit acide ayant été obtenu à partir d'une roche phosphatée non-calcinée contenant des matières organiques colorées et non colorées.

Le procédé selon l'invention est un procédé de traitement d'un acide phosphorique brut de voie humide obtenu par attaque d'une roche phosphatée par l'acide sulfurique suivie d'une filtration et, ce procédé est du type comportant les étapes suivantes:

a) la solution aqueuse d'acide phosphorique brut obtenue par la filtration précitée subit un traitement de prédécoloration au moyen d'un agent adsorbant puis une filtration.

b) le filtrat obtenu en a) est extrait en continu au moyen d'un solvant organique non miscible à l'eau choisi parmi des phosphates d'alkyle et des alcools aliphatiques en $C_4$—$C_9$ puis on sépare une phase aqueuse épuisée d'une phase organique chargée que l'on réextrait à l'eau pour obtenir une phase aqueuse d'acide phosphorique de réextraction.

c) la phase aqueuse de réextraction précédente est concentrée sous chauffage.

d) l'acide précédent est décoloré par chauffage au moyen d'un oxydant; et ce procédé est caractérisé en ce que l'acide phosphorique brut a été obtenu par attaque d'un roche non calcinée, en ce que ledit acide réextrait est concentré à une teneur pondérale en $P_2O_5$ supérieure à 50% et au plus égale à 62% et en ce que l'acide après concentration est décoloré tout d'abord au moyen d'eau oxygénée comme oxydant et ensuite sous chauffage à au moins 110°C au moyen de charbon actif.

Selon l'invention, les roches phosphatées de départ sont principalement constituées de phosphate de calcium sous forme d'apatites telles que celles du Maroc, de Floride, du Togo, qui contiennent des quantités variables de matières organiques pouvant aller jusqu'à quelques pourcents par rapport au $P_2O_5$ contenu dans la roche. La roche broyée est soumise, sans calcination préalable, à un traitement d'attaque au moyen d'un acide fort tel que l'acide sulfurique, ce par quoi l'on obtient une suspension de sulfate de calcium dans une solution impure d'acide phosphorique que l'on sépare. Les paramètres, conditions et dispositifs pour cette attaque sont bien connus dans la technique.

La solution brute de filtration est une solution très colorée qui habituellement présente une teneur en $P_2O_5$ de l'ordre de 25% à 55% selon les conditions d'attaque. Son indice colorimétrique pour une concentration de 40% en $P_2O_5$ peut être aussi élevé que 10 selon une mesure qui sera explicitée ci-après et sa teneur en carbone organique peut être aussi élevée que 3000 ppm par rapport à $P_2O_5$ ou plus. De préférence si l'acide est très coloré, sa concentration en $P_2O_5$ sera ajustée à une valeur maximale de 40% pour l'étape suivante. Dans le cas contraire, des valeurs aussi élevées que 50% sont acceptables.

# 0 030 487

L'acide impur obtenu est ensuite soumis à un traitement de prédécoloration. Tout traitement d'abaissement de la couleur à un indice colorimétrique inférieur à 0,40, de préférence inférieur à 0,2, plus particulièrement inférieur à 0,1, est approprié dans la présente invention Dans une variante préférée, le traitement de prédécoloration comporte l'utilisation de charbon actif. La qualité du charbon actif n'est pas critique. Toutefois, l'on préfère un charbon actif de surface spécifique voisine de 1000 m2/g. La quantité de charbon actif par rapport au poids de $P_2O_5$ présente sera fonction de la quantité de matières organiques présentes et de l'aptitude à l'adsorption de charbon actif considéré. Les paramètres de mise en contact dans cette étape de prédécoloration comprennent la quantité et la qualité du charbon actif, le temps de contact et la température, ces paramètres étant liés. Ils peuvent être déterminés au préalable, l'objectif a atteindre dans cette étape étant d'abaisser l'indice colorimétrique de l'acide brut à une valeur égale ou inférieure à 0,40, de préférence inférieur à 0,20 et plus particulièrement inférieur à 0,10. Habituellement, la température de prédécoloration est comprise entre 30°C et 100°C pendant une durée d'au moins 0,5 heure, de préférence de une à trois heures. Habituellement la quantité de charbon actif/$P_2O_5$ est comprise entre 0,2 et 4%, de préférence entre 0,5 et 1%.

A titre d'exemple indicatif, pour un acide brut très coloré à 40% de $P_2O_5$ provenant d'un minerai de Floride non calciné, un temps de traitement de 2 heures sous agitation à 50°C avec 4% de charbon actif en poudre par rapport à $P_2O_5$, de surface spécifique 1050 m2/g, permet d'aboutir au résultat de prédécoloration. Après la fin du traitement, on filtre et, le cas échéant, on récupère le charbon actif pour régénération.

Le charbon actif peut être utilisé sous forme de poudre en mélange avec l'acide agité, ou bien sous forme de granulés positionnés dans une colonne de circulation de l'acide. Toutefois, il a été trouvé que si l'on utilise uniquement du charbon actif en granulé, la charge d'une colonne se sature relativement vite, si l'acide est fortement coloré.

C'est pourquoi dans un mode de réalisation préféré, on réalise l'étape de prédécoloration de l'acide brut au moyen d'un traitement mixte, successivement par charbon actif en poudre suivi d'une filtration, puis par charbon actif granulé en colonne, lorsque le procédé s'applique à un acide brut très coloré. De la sorte, on limite la quantité de charbon actif en poudre mis en oeuvre et l'on prolonge la durée de vie des colonnes. De plus, l'on observe une synergie entre les deux traitements. Dans ce mode de mise en oeuvre préféré, on traite tout d'abord l'acide brut avec un charbon actif en poudre de surface spécifique indiquée à raison d'un rapport C/$P_2O_5$ de l'ordre ou inférieur à 1%, pendant un temps compris entre 0,5 et trois heures et de préférence de l'ordre de deux heures, à une température entre 30°C et. 100°C, de préférence de l'ordre de 50°C.

Après traitement et filtration, l'acide résultant passe ensuite sur une colonne de charbon actif granulé, le temps de séjour en colonne supposée vide étant réglé par le débit, de l'ordre de 90 minutes, à une température comprise entre 30°C et 100°C, de préférence entre 85°C et 90°C. Il est possible selon le traitement précédent l'obtenir un acide brut prédécoloré d'un indice colorimétrique égal ou inférieur à 0,10, indice qui correspond environ à une coloration 33 Apha selon la norme ASTM D 2108—71.

Toutefois, pour le but recherché dans cette étape de prédécoloration, à savoir l'aptitude de l'acide brut pouvant sublir en continu des opérations d'extraction liquide-liquide par solvant organique non miscible à l'eau recyclé, tout en présentant de bonnes caractéristiques de séparation des phases et un interface de phases, dans les décanteurs, ne présentant pas de zone boueuse, des indices colorimétriques inférieurs à 0,40, de préférence inférieurs à 0,20, et plus particulièrement inférieurs à 0,10, peuvent être suffisants à cet égard.

Ce faisant, la teneur en carbone organique de l'acide brut diminue. Mais le rapport d'abaissement de la coloration n'est pas automatiquement représentatif d'un abaissement correspondant au rapport carbone/$P_2O_5$, compte tenu de ce que l'acide contient également des matières organiques non colorées qui ne sont pas obligatoirement éliminées en cours de l'étape de prédécoloration précédente. C'est ainsi que pour un indice colorimétrique de 0,10, l'acide obtenu peut contenir 1000 ppm ou plus de carbone organique/$P_2O_5$.

L'acide phosphorique brut prédécoloré obtenu ci-dessus est apte à subir des opérations d'extraction liquide-liquide en continu au moyen de solvants organiques non miscibles à l'eau, ce par quoi l'on extrait l'acide phosphorique dans la phase organique que l'on sépare d'un raffinat, l'acide phosphorique contenu dans la phase organique étant ensuite réextrait au moyen d'eau ou d'une solution aqueuse contenant des ions alcalins et le cas échéant des ions phosphates, ce par quoi l'on obtient une solution phosphorique purifiée, le cas échéant, après lavage à l'eau de la phase organique chargée. Les solvants organiques utilisés à cet effet comprennent par exemple des solvants tels que les phosphates d'alkyle et des alcools aliphatiques en $C_4$—$C_9$, le phosphate de tributyle et les alcools butylique et isobutylique étant plus particulièrement préférés. Les conditions de réalisation de ces opérations d'extraction et de réextraction sont bien connues dans la technique tant en ce que concerne les températures, les débits respectifs, les dispositifs utilisés et leur agencement. Voir à ce sujet les brevets français 1.435.877, 1.531.487 et 1.553.095 et les demandes de brevets français n° 79.01751 et 78.27887, à titre d'exemples non limitatifs.

De préférence, la teneur en $P_2O_5$ de l'acide brut entrant à l'extraction est comprise entre 30% et 50%, de préférence inférieure à 40% pour les acides très chargés en matières organiques et à 45% pour

4

les acides peu chargés. L'acide purifié obtenu par réextraction titre habituellement entre 20% et 25% de $P_2O_5$. Au cours de l'extraction une partie des matières organiques présentes dans l'acide brut est séparée de l'acide phosphorique purifié. C'est ainsi que, à titre d'exemple, un acide brut précécoloré selon l'invention titrant 1000 ppm C organique/$P_2O_5$ peut après réextraction titrer moins de 400 ppm de C organique.

Si nécessaire avant réextraction de l'acide phosphorique contenu dans la phase organique, celle-ci est traitée pour en éliminer l'acide sulfurique qui a suivi l'acide phosphorique dans l'extraction par exemple suivant le procédé de la demande de brevet français n° 79.01751, soit suivant celui de la demande de brevet français n° 78.27887.

Habituellement l'acide dilué, purifié et pratiquement incolore obtenu par réextraction à l'eau se recolore par concentration sous chauffage compte tenu des matières organiques encore présentes.

Le procédé de la présente invention comprend donc en plus, en combinaison avec les étapes précédentes, une décoloration finale de l'acide réextrait après concentration et chauffage ou élimination complète de matières organiques, ce par quoi l'on obtient un acide purifié incolore trouvant son application dans l'alimentation.

Le traitement final de décoloration fait utilisation d'un traitement au moyen d'un oxydant sous chauffage et d'un traitement d'adsorption au moyen de charbon actif. Préalablement au traitement de décoloration l'acide de réextraction doit avoir subi une concentration à une valeur de $P_2O_5$ supérieure à 50%, de préférence supérieure à 55% dans le cas d'une décoloration à l'eau oxygénée comme il sera expliqué ci-après.

Dans la première variante de décoloration par chauffage en présence d'un oxydant, l'acide dilué de réextraction est concentré à sa valeur finale en le chauffant à une température comprise entre 80°C et 300°C sous pression réduite ou supérieures à la pression atmosphérique. Ensuite l'acide concentré obtenu est traité au moyen d'eau oxygénée à une température telle que l'on soit dans les conditions de destruction de l'oxydant. Habituellement la température est supérieure à 110°C, de préférence supérieure à 130°C et la durée au moins égale à 15 minutes pour le traitement à l'eau oxygénée. Pour un traitement à la pression atmosphérique, l'acide doit être à une concentration d'au moins 55% de $P_2O_5$ pour l'eau oxygénée de manière à être dans des conditions où l'oxydant est actif, l'efficacité de l'oxydant pour des concentrations inférieures étant insuffisante pour une décoloration très poussée.

Dans un mode de réalisation préféré de cette première variante, l'acide dilué à 25% est concentré à une valeur finale supérieure à 60% de $P_2O_5$ dans un échangeur indirect à double effet, l'oxydant étant introduit dans l'acide préconcentré entre les deux effets de sorte que l'acide subit le traitement de décoloration tout en se concentrant sous chauffage à la température requise.

Toutefois, pous obtenir une décoloration poussée, il y a lieu de parfaire la décoloration en finissant le traitement par action de charbon actif sous chauffage à au moins 110°C.

Le procédé de la présente invention permet sur un acide phosphorique brut de voie humide obtenu par attaque acide d'une roche phosphatée non calcinée et contenant des matières organiques, de pratiquer sans inconvénients des techniques d'extraction et de réextraction aux solvants en continu en vue d'obtenir un acide purifié et concentré présentant une coloration et une teneur en matières organiques très faibles, qui est applicable dans l'industrie de l'alimentation humaine ou animale. C'est ainsi, notamment, que l'acide purifié peut présenter une coloration aussi faible que 10 Apha et moins, qui est exigée d'un acide alimentaire et une teneur en carbone organique aussi faible que 16 ppm/$P_2O_5$.

Dans la description précédente et dans les exemples qui suivant, la coloration de l'acide se mesure de la manière suivante:

1°/Indices colorimétriques (E1 TBP)

On mesure un indice colorimétrique (E1 TBP) sur un acide impur de la manière suivante:

L'acide à mesurer est mis en contact à 50°C avec un volume égal de phosphate de tributyle (TBP) par agitation pendant quelques minutes. Ensuite en laisse décanter jusqu'à l'obtention de deux phases bien séparées. On mesure, à l'aide d'un spectrophotomètre (marque Bausch et... Lomb. modèle Spectronic 70) réglé à 400 m$\mu$, l'extinction du TBP d'extraction éventuellement dilué par du TBP pur dans une cellule de longueur 1 cm ou supérieur, le 100% de transmission de l'appareil étant réglé pour du phosphate de tributyle put et on calcule l'extinction qu'aurait le phosphate de tributyle d'extraction non dilué dans une cellule de mesure de 50 mm de longueur.

2°/Coloration Apha

Par mesure directe sur l'acide selon le mode opératoire de la norme ASTM D 2108—71.

On donne ci-après des exemples de réalisation du procédé de l'invention, les pourcentages étant en poids.

Exemple 1

On prépare selon le procédé connu de digestion par l'acide sulfurique, à partir d'un phosphate tricalcique de Floride non calciné, un acide phosphorique brut dont les caractéristiques suivent:

| | |
|---|---|
| P$_2$O$_5$ | 40% |
| Matières organiques | 2450 ppm de C/P$_2$O$_5$ |
| Indice colorimétrique (E1 TBP) | 10 |

On traite l'acide précédent pour le prédécolorer au moyen de charbon actif selon le mode de réalisation préféré comprenant la mise en oeuvre de charbon actif en poudre et granulé.

L'acide brut est tout d'abord chauffé sous agitation pendant deux heures à 50°C en présence de 0,40% par rapport au P$_2$O$_5$ présent de charbon actif en poudre, marque commerciale Actibon C de Norit NV (Hollande) (surface BET: 1050 m2/g).

Après filtration, la solution d'acide présente un indice colorimétrique (E1 TBP) de 3,2 et une teneur en carbone organique de 1700 ppm/P$_2$O$_5$. L'acide résultant est ensuite introduit en continu dans une colonne chargée en charbon actif granulé (qualité CAL de Pittsburg Chemical Company—USA—de surface spécifique BET: 1000 m2/g) à raison de 12 litres/heure (section de colonne: 78 cm2—hauteur du lit de charbon 220 cm—masse du charbon actif 7,5 kg), la colonne étant calorifugée vers 85—90°C. La colonne ainsi préparée peut servir à traiter 800 kg de P$_2$O$_5$ vant de recueillir un acide d'indice colorimétrique (E1 TBP) de 0,10. L'acide moyen obtenu contient 1000 ppm de carbone organique/P$_2$O$_5$.

L'acide résultant est ensuite soumis à 50°C dans une batterie de 8 mélangeurs décanteurs, à une extraction à contre-courant au moyen de phosphate de tributyle, dans un rapport de phase organique/aqueuse de 9. La phase organique est lavée dans une batterie de 7 mélangeurs décanteurs au moyen d'un faible volume d'eau dans un rapport phase aqueuse/phase organique de 1/18 et en injectant en plus au 5ème étage une solution à 50% de soude à raison de 30 g de NaOH par kilogramme de P$_2$O$_5$ introduit à l'extraction; puis elle est réextraite à contre-courant, à 65°C, sur une batterie comportant 5 mélangeurs décanteurs au moyen d'eau dans un rapport de phase organique/aqueuse de 6. On soutire de la batterie la phase aqueuse d'acide phosphorique purifié suivante:

| | |
|---|---|
| P$_2$O$_5$ | 21,5% |
| coloration | 9 Apha |

L'acide précédent est concentré à son titre commercial à 62% de P$_2$O$_5$ sous pression atmosphérique en le chauffant dans un dispositif à double effet à chauffage indirect à contre-courant, comprenant un premier effet fonctionnant à 70°C destiné à porter la concentration à 38% de P$_2$O$_5$ et un deuxième effet fonctionnant à 150°C pour la concentration finale.

L'acide résultant après un temps de séjour à 150°C pendant 1,5 heure, présente une coloration de 420 Apha et contient 250 ppm de C organique/P$_2$O$_5$.

L'acide obtenu subit ensuite une décoloration finale selon plusieurs variantes, les variantes 1A, 1C, 1D, 1E, et 1F étant données à titre de comparaison:

Méthode 1A:

Une partie de l'acide précédent est chauffé à 130°C pendant 1,5 heure en présence de 2,5 g d'acide chlorique (ou 3,2 g de chlorate de sodium) et de 80 mg d'acide chlorhydrique par kg d'acide. On recueille un acide de coloration 32 Apha. Cet acide est agité ensuite deux heures à 120°C avec 0,2% en poids d'Actibon C par rapport à P$_2$O$_5$. Après filtration, l'acide final résultant présente une coloration de 2 Apha et contient 27 ppm de C organique par rapport à P$_2$O$_5$.

Méthode 1B

Une partie de l'acide est décolorée au moyen de 5 g de H$_2$O$_2$ compté à 100% par kg d'acide à 130°C pendant 15 minutes (on obtient une coloration de 66 Apha), ensuite par action de 0,5% de charbon actif Actibon C par rapport à P$_2$O$_5$, sous agitation pendant deux heures à 120°C. L'acide obtenu présente une coloration de 5,5 Apha et contient 70 ppm de C organique par rapport à P$_2$O$_5$.

Méthode 1C

On traite une partie de l'acide purifié à 62% de P$_2$O$_5$ à 160°C pendant une heure en présence de 2,5 g de HClO$_3$ (ou 3,2 g de NaClO$_3$) par kg d'acide. Les résultats sont résumés dans le tableau 1 suivant.

Méthode 1D

On traite l'acide purifié à 62% de P$_2$O$_5$ à 160°C pendant une heure au moyen de 2,5 g de HClO$_3$ (ou de 3,2 g de NaClO$_3$) et de 0,08 g de HCl par kg d'acide. Les résultats obtenus sont réunis dans le tableau 1 suivant.

**Méthode 1E**

Sur l'acide purifié à 62% de $P_2O_5$ on poursuit la concentration à 68% de $P_2O_5$ sous pression atmosphérique. Ensuite l'acide résultat est traité pendant une heure à 170°C par 2,5 g de $HClO_3$ (ou 3,2 g de $NaClO_3$) par kg d'acide. Les résultats sont réunis dans le tableau 1 suivant.

**Méthode 1F**

L'acide précédent à 68% de $P_2O_5$ est traité par 5 g de $H_2O_2$ compté à 100% à 130°C pendant 15 minutes par kg d'acide. L'acide obtenu présente une coloration de 180 Apha. Après dilution à 62% de $P_2O_5$ et traitement deux heures à 120°C par 0,5% d'Actibon C/$P_2O_5$, on obtient les résultats du tableau 1 suivant.

TABLEAU 1

| | % de $P_2O_5$ dans l'acide à décolorer | Résultats sur l'acide décoloré | | | |
|---|---|---|---|---|---|
| | | degré Apha | ppm de C org./ $P_2O_5$ | ppm de Cl$^-$/ $P_2O_5$ | ppm de Cl oxy-dant/ $P_2O_5$ |
| 1C | 62 | 5 | 36 | 6,5 | <2 |
| 1D | 62 | 5 | 30 | 1,5 | 3,5 |
| 1E | 68 | 2 | 17 | 1 | 5 |
| 1F | 68 | 7 | 65 | — | — |

L'acide phosphorique brut purifié par extraction à 21,5% de $P_2O_5$ est concentré à 55% à une température finale de 130°C puis est maintenu à cette température pendant deux heures de façon à développer la coloration. On mesure une coloration de 180 Apha et on dose 260 ppm de C/$P_2O_5$. On chauffe l'acide obtenu pendant 15 minutes à 130°C avec 5 g de $H_2O_2$ compté à 100% par kg d'acide. On mesure 37 Apha. On agite ensuite avec 0,5% d'Actibon C/$P_2O_5$ pendant deux heures à 90°C. On obtient une coloration de 3 Apha et on dose 100 ppm de C/$P_2O_5$. L'acide précédent se recolore à 14 Apha après concentration à 60% de $P_2O_5$ sous pression atmosphérique (température maximale de 155°C). Par contre l'acide ne se recolore qu'à 8 Apha si on le concentre sous pression réduite à 60% de $P_2O_5$ de façon à ne pas dépasser 110°C, c'est-à-dire en restant à une température nettement inférieure à celle à laquelle l'acide à 55% avait été obtenu.

**Exemple comparatif 1**

L'acide brut de l'exemple 1 à 40% de $P_2O_5$ avant le traitement de prédécoloration selon l'invention, est soumis à l'extraction au phosphate de tributyle selon le mode opératoire de l'exemple 1. Il est impossible dans ces conditions de pratiquer une extraction industrielle en continu compte tenu des temps nécessaires pour la décantation des phases dans les batteries de mélangeurs décanteurs. D'autre part, après un temps très long de décantation il subsiste à l'interface des phases une troisième phase boueuse noirâtre.

**Exemple 2 et comparatif 2**

Dans ces exemples on compare en discontinu au laboratoire les différences d'aptitudes à la décantation d'acides de voie humide obtenus à partir d'un phosphate de Floride on calciné. L'acide phosphorique brut de départ obtenu selon le procédé de voie humide contient:

| | |
|---|---|
| $P_2O_5$ | 40% en poids |
| C organique | 2250 ppm/$P_2O_5$ |
| Indice colorimétrique | E1 TBP: 10,6 |

1°/Essai d'extraction sur l'acide brut

On met en contact 600 ml de l'acide précédent à 50°C avec 600 ml de phosphate de tributyle on d'alcool butylique comme extractant dans un récipient cylindrique en verre de 12,5 cm de diamètre et de hauteur 24 cm. On agite les phases pendant 3 minutes au moyen d'un agitateur Rayneri muni d'une turbine centripète de diamètre 5,5 cm tournant à 800 tr/min. et immergé aux 2/3 du liquid. On arrête l'agitateur et on observe les décantations en fonction du temps que l'on chiffre par rapport à l'interface limite. Les résultats sont réunis dans le tableau II.

2°/On reprend une partie de l'acide brut de départ précédent et on le traite selon le procédé de décoloration de l'exemple 1 par du charbon actif en poudre puis granule. On obtient un acide prédécoloré d'indice colorimétrique E1 TBP de 0,03 et contenant 650 ppm $C/P_2O_5$. On extrait de la même façon l'acide prédécoloré au moyen des deux solvants indiqués et l'on apprécie de la même manière que précédemment l'aptitude à la décantation des phases. Les résultats sont réunis dans le tableau II suivant:

TABLEAU II

| Acide utilisé | Solvant | % de décantation |
|---|---|---|
| Acide brut ex Floride non calciné E1 TBP=10,6 2250 ppm $C/P_2O_5$ $P_2O_5$: 40% | Phosphate de tributyle | 10% après 3 min. 30% après 6 min. 35% après 20 min. |
| idem | Alcool butylique | 20% après 1 heure |
| Acide brut ex Floride prédécoloré par C actif à E1 TBP: 0,03 650 ppm $C/P_2O_5$ | Phosphate de tributyle | 25% après 1 min. 70% après 1,5 min. 100% après 2 min. 10 sec. |
| idem | Alcool butylique | 95% après 1 min. 100% après 1,5 min |

Avec l'acide non prédécoloré on note l'apparition de flocs gélatineux noirâtres qui se rassemblent aux interfaces et les solvants se colorent en brun très foncé.

Ces essais montrent bien l'influence du traitement de prédécoloration de l'invention sur l'aptitude à la décantation des phases lorsque l'on utilise des solvants purs. La différence d'aptitude à la décantation et la présence de substances gélatineuses s'amplifient lorsque l'on utilise des solvants recyclés après réextraction sur l'acide non prédécoloré.

Exemple 3 et comparatif 3

On prépare un acide phosphorique brut par digestion de phosphate non calciné de Togo à une concentration de 40% de $P_2O_5$. Cet acide présente un indice colorimétrique E1 TBP de 1,7 et contient 400 ppm de C organique/$P_2O_5$.

Cet acide brut lorsqu'on l'examine du point de vue de son aptitude à l'extraction par l'alcool butylique selon le mode opératoire de l'exemple 2, présente les caractéristiques suivantes:

80% de décantation après 1 minute
95% de décantation après 2 minutes
100% de décantation après 3,5 minutes

On note la présence de peaux noirâtres peu abondantes à l'interface mais le solvant se colore en brun très foncé. L'aptitude à la décantation diminue fortement lorsqu'on fait utilisation d'un solvant recyclé.

L'acide brut précédent est prédécoloré sur une colonne de charbon actif granulé dans les mêmes conditions que dans l'exemple 1 (en ce qui concerne le charbon actif granulé) sans subir de prétraitement au moyen du charbon actif en poudre. La capacité de la colonne est, dans le cas présent, de 2500 kg de $P_2O_5$ purifié à moins de 0,10 d'indice colorimétrique et le lot moyen d'acide obtenu titre 130 ppm de C organique/$P_2O_5$.

Lorsque l'acide prédécoloré précédent est soumis à l'étape d'extraction et de réextraction de la façon décrite dans l'exemple 1, on obtient un acide réextrait purifié à 23% que l'on concentre à 62% de $P_2O_5$ à 150°C. L'acide résultant s'est recoloré par chauffage à 150°C (coloration 240 Apha) et contient 82 ppm de C organique/$P_2O_5$. L'acide obtenu subit une décoloration finale selon plusieurs variantes.

Décoloration-méthode 3A

L'acide précédent est décoloré en le traitant à 160°C pendant une heure au moyen de 1 g de

8

HClO$_3$ (ou 1,4 g de NaClO$_3$) par kg d'acide. On obtient un acide concentré de coloration inférieure à 5 Apha et contenant 16 ppm de C organique/P$_2$O$_5$.

Décoloration-méthode 3B

L'acide coloré à 62% de P$_2$O$_5$ est traité 15 minutes à 160°C au moyen de 5 g de H$_2$O$_2$ comptée à 100% par kg d'acide. On obtient un acide de coloration 35 Apha.

Celui-ci est traité par 0,5% de charbon actif Actibon C (Norit NV) par rapport à P$_2$O$_5$ pendant deux heures à 120°C. Après filtration on obtient un acide à 62% de P$_2$O$_5$ de coloration 7 Apha et contenant 28 ppm de C organique par rapport à P$_2$O$_5$.

## Revendications

1. Procédé de traitement d'un acide phosphorique brut de voie humide, en vue d'obtenir un acide purifié présentant un indice de coloration Apha inférieur à 10, cet acide étant obtenu par attaque d'une roche phosphatée par l'acide sulfurique suivie d'une filtration, procédé du type comportant les étapes suivantes:

a) la solution aqueuse d'acide phosphorique brut obtenue par la filtration précitée subit un traitement de prédécoloration au moyen d'un agent adsorbant puis une filtration.

b) le filtrat obtenu en a) est extrait en continu au moyen d'un solvant organique non miscible à l'eau choisi parmi des phosphates d'alkyle et des alcools aliphatiques en C$_4$—C$_9$ puis on sépare une phase aqueuse épuisée d'une phase organique chargée que l'on réextrait à l'eau pour obtenir une phase aqueuse d'acide phosphorique de réextraction.

c) la phase aqueuse de réextraction précédente est concentrée sous chauffage.

d) l'acide précédent est décoloré par chauffage au moyen d'un oxydant; procédé caractérisé en ce que l'acide phosphorique brut a été obtenu par attaque d'une roche non calcinée, en ce que ledit acide réextrait est concentré à une teneur pondérale en P$_2$O$_5$ supérieure à 50% et au plus égale à 62% et en ce que l'acide après concentration est décolorée tout d'abord au moyen d'eau oxygénée comme oxydant et ensuite sous chauffage à au moins 110°C au moyen de charbon actif.

2. Procédé selon la revendication 1, caractérisé en ce que l'on prédécolore l'acide brut avant extraction jusqu'à un indice colorimétrique inférieur à 0,4.

3. Procédé selon la revendication 1 ou 2, caractérisé en ce que l'on prédécolore l'acide brut au moyen de charbon actif à une température comprise entre 30°C et 100°C pendant un temps d'au moins environ 0,5 heure.

4. Procédé selon la revendication 3, caractérisé en ce que la quantité de charbon actif est comprise entre 0,2 et 4%, par rapport au poids de P$_2$O$_5$.

5. Procédé selon l'une des revendications 3 et 4, caractérisé en ce que l'on traite tout d'abord l'acide au moyen de charbon actif en poudre, en ce que l'on filtre puis en ce que l'on traite le filtrat au moyen de charbon actif granulé.

## Patentansprüche

1. Verfahren zur Behandlung einer nach dem Nassverfahren hergestellten Rohphosphorsäure zur Herstellung einer gereinigten Säure mit einer APHA-Farbzahl unter 10, wobei die Säure durch Aufschluss eines phosphathaltigen Gesteins mittels Schwefelsäure und nachfolgende Filtration erhalten wird, das folgende Stufen enthält:

a) die wässrige Rohphosphorsäurelösung, die man nach der genannten Filtration erhält, wird einer Behandlung zur Vorentfärbung durch ein adsorbierendes Mittel und anschließend einer Filtration unterworfen.

b) das aus a) erhaltene Filtrat wird kontinuierlich mit einem organischen, nicht wassermischbaren Lösungsmittel extrahiert, das unter den Alkylphosphaten und den aliphatischen C$_4$—C$_9$-Alkoholen ausgewählt wird, dann trennt man eine erschöpfte wässrige Phase von einer belandenen organischen Phase ab, die wiederum mit Wasser extrahiert wird, um eine wässrige Phosphorsäure-Reextraktionsphase zu erhalten;

c) die vorangehende wässrige Reextraktionsphase wird unter Erwärmen konzentriert;

d) die vorangehende Säure wird unter Erwärmung mit Hilfe eines Oxydationsmittels entfärbt; dadurch gekennzeichnet, daß man die Rohphosphorsäure durch Aufschluss eines nicht calcinierten Gesteins gewinnt, daß die genannte reextrahierte Säure auf einen P$_2$O$_5$-Gehalt von mehr als 50 Gew.%, höchstens 62 Gew.% konzentriert wird, und daß die Säure nach der Konzentrierung zunächst mit Wasserstoffperoxid als Oxydationsmittel und anschließend unter Erwärmung auf wenigstens 110°C mit Aktivkohle entfärbt wird.

2. Verfahren nach Anspruch 1, dadurch gekennzeichnet, daß man die Rohsäure vor der Extraktion bis auf eine Farbzahl unter 0,4 vorentfärbt.

3. Verfahren nach Anspruch 1 oder 2, dadurch gekennzeichnet, daß man die Rohsäure mit Aktivkohle bei einer Temperatur zwischen 30 und 100°C während eines Zeitraums von wenigstens 0,5 h vorentfärbt.

4. Verfahren nach Anspruch 3, dadurch gekennzeichnet, daß die Menge der Aktivkohle zwischen 0,2 und 4 Gew.%, bezogen auf $P_2O_5$, beträgt.

5. Verfahren nach einem der Ansprüche 3 oder 4, dadurch gekennzeichnet, daß man die Säure zunächst mit pulverförmiger Aktivkohle behandelt, anschließend filtriert und das Filtrat mit granulierter Aktivkohle behandelt.

## Claims

1. A process for treating a crude wet-process phosphoric acid for producing a purified acid having an Apha colouration index of less than 10, said acid being produced by the attack on a phosphate-bearing rock by means of sulphuric acid followed by a filtration step, the process being of the type comprising the following steps:

a) the aqueous solution of crude phosphoric acid which is produced by the above-mentioned filtration step is subjected to a pre-decolouration treatment by means of an absorbing agent, followed by a filtration operation,

b) the filtrate produced in step a) is continuously extracted by means of an organic water-immiscible solvent selected from alkyl phosphates and $C_4$—$C_9$ aliphatic alcohols, followed by separation of an exhausted aqueous phase from a charged organic phase which is re-extracted with water to produce an aqueous re-extraction phosphoric acid phase,

c) said re-extraction aqueous phase is concentrated, with heating,

d) the foregoing acid is decoloured by heating by means of an oxidising agent; the process being characterised in that the crude phosphoric acid was produced by attack on a non-roasted rock, that said re-extracted acid is concentrated to a $P_2O_5$ content by weight of more than 50% and at most equal to 62%, and that the acid after concentration is decoloured firstly by means of hydrogen peroxide as the oxidising agent and then with heating to at least 110°C by means of activated carbon.

2. A process according to claim 1 characterised in that the crude acid is subjected to pre-decolouration before extraction, to a colorimetric index of lower than 0.4.

3. A process according to claim 1 or claim 2 characterised in that the crude acid is subjected to pre-decolouration by means of activated carbon at a temperature of from 30°C to 100°C for a period of at least about 0.5 hour.

4. A process according to claim 3 characterised in that the amount of activated carbon is from 0.2 to 4%, with respect to the weight of $P_2O_5$.

5. A process according to one of claims 3 and 4 characterised in that the acid is first treated by means of activated carbon in powder form, that filtration is effected, and that the filtrate is then treated by means of granulated activated carbon.